(19) **Europäisches Patentamt**

**European Patent Office**

**Office européen des brevets**

(11) **EP 0 687 454 B1**

(12) **EUROPEAN PATENT SPECIFICATION**

(45) Date of publication and mention
of the grant of the patent:
**26.02.2003 Bulletin 2003/09**

(51) Int Cl.⁷: **A61G 5/04**

(21) Application number: **95109366.5**

(22) Date of filing: **16.06.1995**

(54) **Power assisted vehicle and method for driving said vehicle**

Hilfskraftfahrzeug und Verfahren zum Antrieb desselben

Véhicule à propulsion assistée et méthode de commande dudit véhicule

(84) Designated Contracting States:
**DE DK FR GB NL SE**

(30) Priority: **16.06.1994 JP 13472794**
**17.10.1994 JP 25039694**
**06.06.1995 JP 13903495**

(43) Date of publication of application:
**20.12.1995 Bulletin 1995/51**

(73) Proprietor: **YAMAHA HATSUDOKI KABUSHIKI KAISHA**
**Iwata-shi Shizuoka-ken, 438 (JP)**

(72) Inventors:
• **Kanno, Nobuyuki**
**Iwata-shi, Shizuoka-ken 438 (JP)**
• **Uchiyama, Atsushi**
**Iwata-shi, Shizuoka-ken 438 (JP)**

(74) Representative: **Grünecker, Kinkeldey,**
**Stockmair & Schwanhäusser Anwaltssozietät**
**Maximilianstrasse 58**
**80538 München (DE)**

(56) References cited:
**EP-A- 0 569 954          US-A- 5 234 066**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

**Description**

This invention relates to a power assisted vehicle according to the preamble of independent claim 1 and to a method for driving a power assisted vehicle according to the preamble of independent claim 13.

From the US Patent 5,234,066 a power assisted vehicle and a method for driving such a power assisted vehicle as indicated above are known.

So far has been proposed a manual-electric wheelchair as an existence lying midway between the manual wheelchair and the electric one. This manual-electric wheelchair lightens the physical burden on the handicapped rider by detecting the human power being intermittently applied on the wheels, propelling means, and applying an assist power corresponding to the detected human power. With such a structure, it becomes possible for the rider to operate the manual-electric wheelchair in a manual wheelchair feeling, and the rider's mental pain also is softened.

However, on the ordinary manual-electric wheelchair above, since the assist power is applied only while the human power is being applied and is removed as soon as the human power is removed, the pitch (number of times) with which the rider rotates the wheel does not differ from that of the ordinary manual wheelchair, and there were points to be further improved from the viewpoint of lightening the burden on the rider.

Accordingly, it is an objective of the present invention to improve the power assisted vehicle and to improve the method for driving the same as indicated above, which increase the safety of riding said vehicle and at the same time lightens the burden of the rider.

According to the present invention this objective is solved by a power assisted vehicle according to the independent apparatus claim 1 and by a method for driving a power assisted power vehicle according to the independent method claim 13.

Furthermore, it is desirable to create an inertia running feeling similar to that of an ordinary vehicle not employing any auxiliary power. Additionally, the magnitude of the auxiliary power should preferably be adjustable at will according to the physical power of the rider, vehicle running direction, etc.

Since the auxiliary or assist power is still left applied and continues to drive the vehicle even after the human power is removed, the running distance of the vehicle for one application of the human power becomes longer, the pitch of the riders power application on the vehicle can be longer and the burden on the rider is further lightened.

According to a preferred embodiment, said control means comprises reduction means for reducing the auxiliary power after stopping the supply of human power. Preferably, the auxiliary power is maintained approximately at its maximum value for a fixed period from the time when said auxiliary power reaches its maximum value and after said period, said auxiliary power is gradually reduced from its maximum value at a substantially constant rate.

Accordingly, the running of the vehicle can be given an ordinary inertia running feeling so that the rider is not given a feeling of physical disorder.

According to another preferred embodiment, the direction of the auxiliary power corresponds with the human power for accelerating or decelerating the vehicle, respectively.

Preferably the reduction means includes an adding section for summing up the current value of the auxiliary power according to a reduction process in accordance with human power applied during a first interval for advancing the vehicle and the value of the auxiliary power in accordance with human power applied during a second interval for reversing the vehicle.

Accordingly, the inertia running state of the vehicle can be cancelled and the vehicle can be rapidly brought to a stop by applying human power in the inverse direction, while the vehicle is of an inertia running state.

According to yet another preferred embodiment, the absolute value of the auxiliary power and/or the reduction rate are variable. That permits to change the magnitude of the auxiliary power at will and the needs of the rider can be flexibly coped with.

In a preferred embodiment, the auxiliary power is increased in accordance with an increase in the human power supply and when reaching a maximum value, the auxiliary power is successively reduced in accordance with a prescribed reduction rate.

Preferably, when the vehicle is driven again by human power exceeding a value corresponding to the current auxiliary power in accordance with the current reduction process, the auxiliary power is increased again in accordance with said human power.

Further preferred embodiments of the present invention are laid down in further dependent claims.

Hereinafter, the present invention is illustrated and explained in greater detail by means of preferred embodiments thereof in conjunction with accompanying drawings wherein:

Fig. 1      is a side view of a manual-electric wheelchair related to an embodiment of this invention.

Fig. 2      is a front view of a manual-electric wheelchair related to an embodiment of this invention.

Fig. 3      is a back view showing the folded state of a manual-electric wheelchair related to an embodiment of this invention.

Fig. 4      is a partly brokenaway top view of the wheel portion showing the human power detecting section and the power assist system section of a manual-electric wheelchair related to an embodiment of this invention.

Fig. 5    is a partly brokenaway top view of the wheel portion in a larger scale showing the human power detecting section and the power assist system section of a manual-electric wheelchair related to an embodiment of this invention.

Fig. 6    is an outside view of a wheel of a manual-electric wheelchair related to an embodiment of this invention.

Fig. 7    is an outside view of a wheel rim portion of a manual-electric wheelchair related to an embodiment of this invention.

Fig. 8    is a sectional view for describing the state of the springs of the human power detecting section.

Fig. 9    is a sectional view for describing the state of the spring of the human power detecting section while a human power is applied,

Fig. 10    is a sectional view for describing the state of the spring of the human power detecting section while a human power is applied,

Fig. 11    is a block diagram showing the structure of the controller,

Fig. 12    is a diagram showing the output characteristics of the potentiometer in regard to human power applied on the hand rim,

Fig. 13    is a diagram showing the relationship between the input signal and the target torque (characteristic of the assist power calculating means) using the assist ratio as a parameter,

Fig. 14    is a diagram showing the change with time of the target value (target torque) of the assist power calculated by the controller,

Fig. 15    is a circuit structure diagram of the assist power calculating means,

Fig. 16    is a block diagram showing the structure of a controller related to another embodiment of this invention,

Fig. 17    is an input signal characteristics diagram,

Fig. 18    is a flow chart showing the assist power calculating

Fig. 19    is a diagram showing changes in the wheelchair speed v, resultant drive power F, assist drive power $F_A$, and human power time $F_M$ with time,

Fig. 20    is a flow chart showing the assist power calculating process,

Fig. 21    is a diagram showing changes in the wheelchair speed v, resultant drive power F, assist drive power $F_A$, and human power $F_M$ with time,

Fig. 22    is a diagram showing changes in the wheelchair speed v, resultant drive power F, assist drive power $F_A$, and human power $F_M$ with time,

Fig. 23    is a diagram showing changes in the wheelchair speed v, resultant drive power F, assist drive power $F_A$, and human power $F_M$ with time,

Fig. 24    is a diagram showing changes in the wheelchair speed v, resultant drive power F, assist drive power $F_A$, and human power $F_M$ with time, and

Fig. 25    is a sectional view around the motor of the assist power device provided with an electromagnetic clutch.

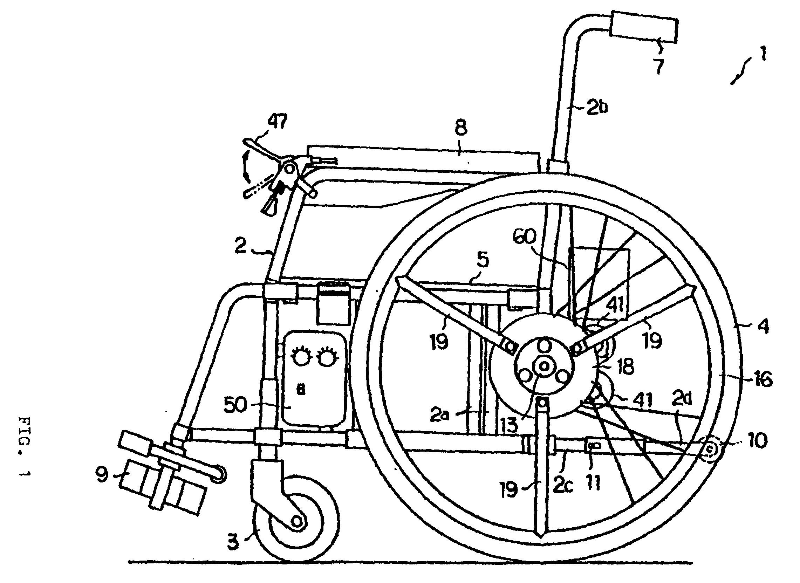

Fig. 1 is    a side view of a manual electric wheelchair as an example of a power assisted vehicles according to a preferred embodiment of this invention.

The manual-electric wheelchair 1 according to this invention is constructed by assembling a power assist system on an existing foldable wheelchair, and the front and rear portions of its pipe frame 2 are supported with paired left and right casters 3 and wheels 4.

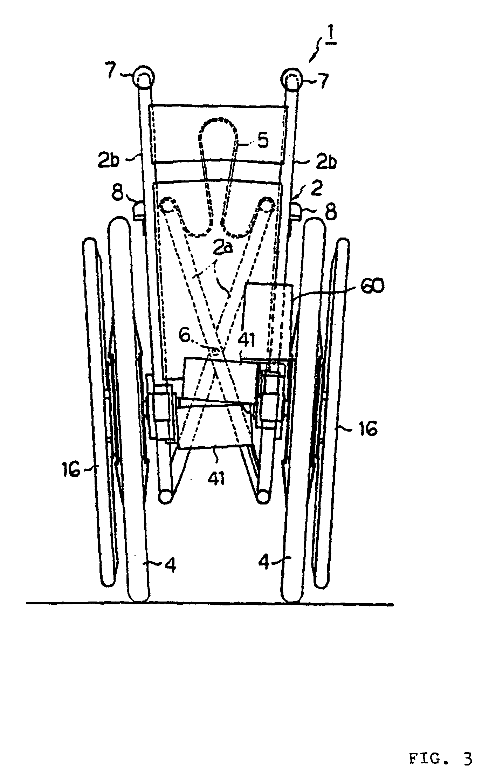

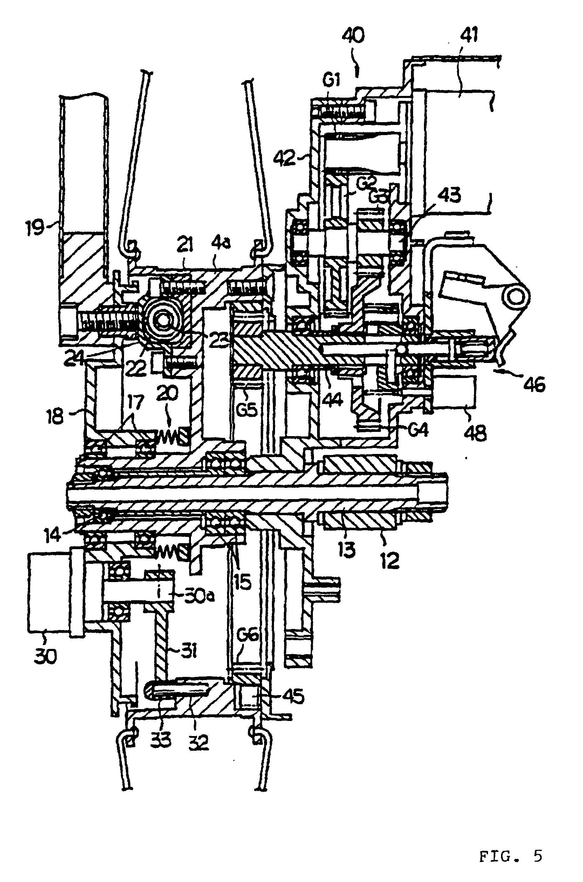

On the central portion of the frame 2 is stretched a cloth seat 5 (See Fig. 5) on which a rider is seated. The frame has paired front and rear cross members 2a intersected with each other in an X-figure shape and pivoted with each other through a shaft 6 at their intersection. Therefore, the wheelchair 1 can be folded as shown in Fig. 3, and, in this instance, the sheet 5 is also inflected.

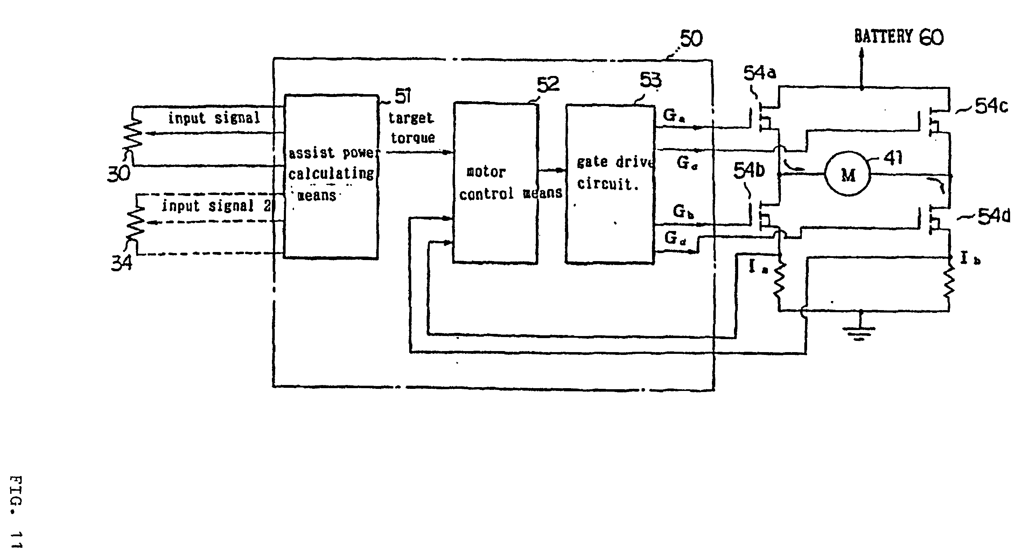

On the rear portion of the frame 2 are erected paired left and right handle arms 2b, the top end portion of each of which is bent rearward and is covered with a grip 7 for the helper, in this embodiment, the potentiometer 34 (See Fig. 11) for detecting the power applied on the grip 7 by the helper is accommodated in the grip 7.

On the central top portions of the frame 2 are mounted paired left and right arm rests 8 for the rider, while paired left and right foot rests 9 for the rider are installed on the front end lower portion of the frame 2. In each rear end portion of the paired left and right arms 2c longitudinally extended through the lower portion of the frame 2 is fitted another arm 2d slidably longitudinally, and a roller 10 is rotatably supported on the rear end portion of each arm 2d. The arm 2d is supported for longitudinal sliding by making a pin 11 projected from the arm 2c be fit in its longitudinal slot, and is kept urged rearward by a spring (not shown) retained under compression between the arm 2c and itself.

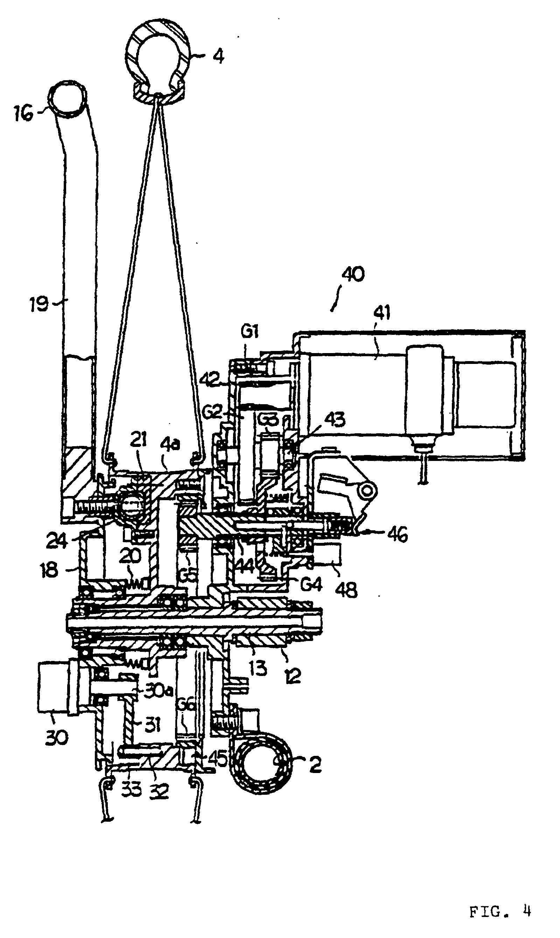

Each of the paired left and right wheels 4 is rotatably borne as shown in Figs. 4 and 5, through ball bearings 14 and 15, on the wheel shaft 13 supported on a bracket 12 mounted on the frame 2, and each wheel 4 is provided, on its outside, with a ring-like hand rim 16 so as to be rotated by the rider. The hand rim 16 is fixed, through three spokes 19, on a disk 18 rotatably supported on the hub 4a of the wheel 4 through bearings 17, so that the hand rim 16 can be rotated independently of the wheel 4. In this embodiment, a damper 20 is provided between the hub 4a of the wheel 4 and the disk 18 as shown in Figs. 4 and 5.

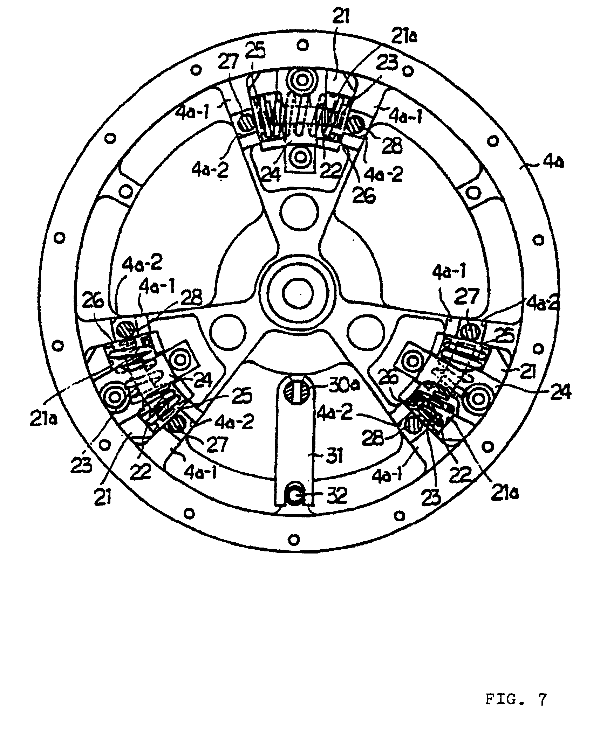

The hand rim 16 is elastically connected with the wheel 4 at three places around its periphery through a structure shown in Fig. 7.

As shown in Fig. 7, in a space formed between each pair of ribs 4a-l formed on the hub 4a of the wheel 4 is accommodated a spring guide 21 having an arcuate groove 21a. A spring 22 having a larger diameter and another spring 23 having a smaller diameter are accommodate d in each spring guide 21. In Fig. 7, the numeral 24 shows a retainer for preventing the springs 22 and 23 from coming out.

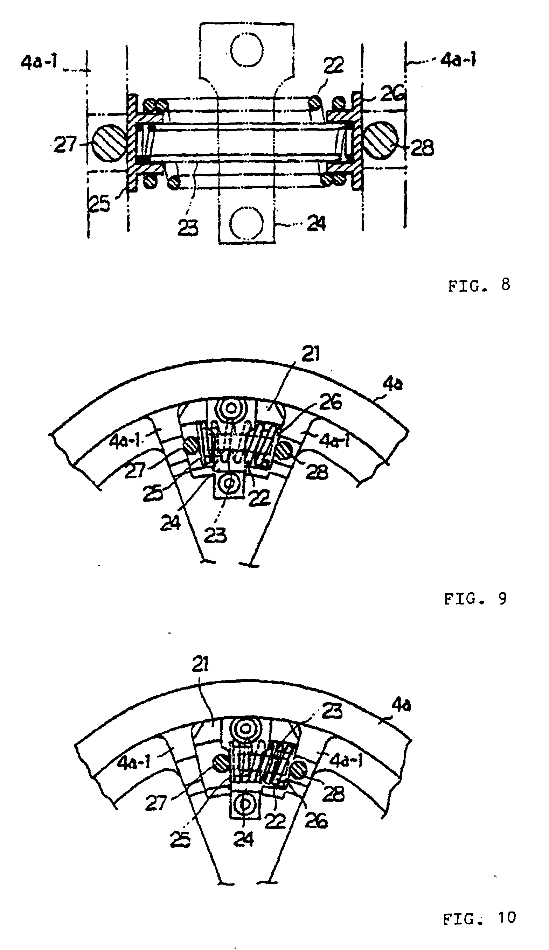

Each of the springs 22 and 23 has both ends caught by the spring catches 25 and 26, and, in a neutral state in which no human power is applied on the hand rim 16, as shown in detail in Fig. 8, while the spring catches 25 and 26 are in hitting contact with a pair of ribs 4a-1, and the spring 23 having a smaller diameter is retained between both spring catches 25 and 26 under a predetermined compression, the spring 22 having a larger diameter is somewhat disconnected from the spring catches 25 and 26, and applies no power on the spring catches 25 and 26. Here, the spring constant of the larger diameter spring 22 is set larger than that of the smaller diameter spring 23.

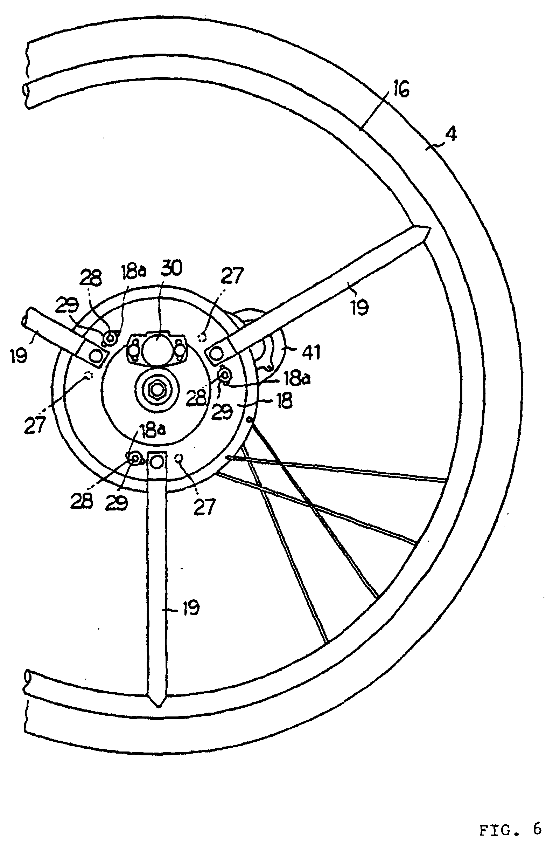

The disk 18 is provided with three pairs of pins 27 and 28 projected inward from the inside surface thereof and arranged at regular circular intervals, and, in a neutral state in which no human power is applied on the hand rim 16, each pair of pins 27 and 28 are in contact with the end surfaces of the spring catches 25 and 26 as shown in Figs. 7 and 8. Although one pin 27 is fixed on the inside of the disk 18, the other pin 28 is set through an arcuate slot 18a formed through the disk 18 as shown in Fig. 6 so that the position of the pin 28 may be adjustable, and is fastened on the disk 18 through a nut 29 in contact with the end surface of the spring catch 26. Each rib 4a-1 has a groove 4a-2 so formed as to permit the movement of the pin 27 or 28.

As shown in Figs. 4 through 7, the disk 18 on the hand rim 16 side has a potentiometer 30 fixed thereon to detect the magnitude and the direction of the human power applied on the hand rim 16, an end of a lever 31 is connected to the end portion of the input shaft 30a of the potentiometer 30, and the other end of the lever 31 is engaged with a pin 32 projected from the hub 4a of the wheel 4 through a rubber cap 33 for preventing the lever 31 from playing.

On the inside of each of paired left and right wheels 4, as shown in Figs. 4 and 5, is installed a power assist system 40 (only one is shown in Figs. 4 and 5).

Furthermore, it should be noted that a potentiometer 30 is associated with each of the left and right wheels so as to detect human power directly applied to each of said left and right wheels. In a similar manner, each of the above mentioned grips 7 is provided with a potentiometer 34 for detecting human power applied to the left or right side of the vehicle.

The power assist system 40 has a drive motor 41 for generating the assist power and a gear case 42 accommodating gears G1 through G4 for transmitting the drive power of the drive motor 41 to the wheel 4, and the drive motor 41 has a small diameter gear G1 connected to its output shaft end. The gear case 42 is held on the wheel shaft 13 while being fixed on the frame 2 through a rubber sleeve as shown in Fig. 4.

The gear case 42 has a countershaft 43 and a drive shaft 44 rotatably borne in parallel with the wheel shaft 13, the countershaft 43 has a larger diameter gear G2 and a smaller diameter gear G3 fixed thereon, and the drive shaft 44 has a larger diameter gear G4 rotatably journaled thereon and a smaller diameter gear G5 connected with the other end portion. Here, the larger diameter gear G2 is in mesh with the smaller diameter gear G1, the smaller diameter gear G3 is in mesh with the larger diameter gear G4, and the gear G5 is in mesh with a larger diameter ring gear G6 fitted and held within the hub 4a. The ring gear G6 is held within the hub 4a for relative rotational movement, and the rotation of the ring gear G6 is transmitted to the hub through a plurality of damper members 45 arranged in the peripheral direction between the ring gear G6 and the hub 4a.

The drive shaft 44 is provided with a dog clutch 46 for connecting/disconnecting the larger diameter gear G4 with the drive shaft 44, and this clutch 46 is engaged/disengaged by swinging the clutch lever 47 (see Fig. 1) installed on the forward upper portion of the frame 2. Near the dog clutch 47 is installed a limit switch 48 for detecting the engagement/disengagement of the dog clutch 46 so that the drive motor 41 may not be energized while the dog clutch 46 is disengaged.

Although the description above is for the structure of the power assist system 40 provided for the wheel 4 on one side, a common power assist system is employed for the wheel on the other side also to gain mass production effect due to parts communization.

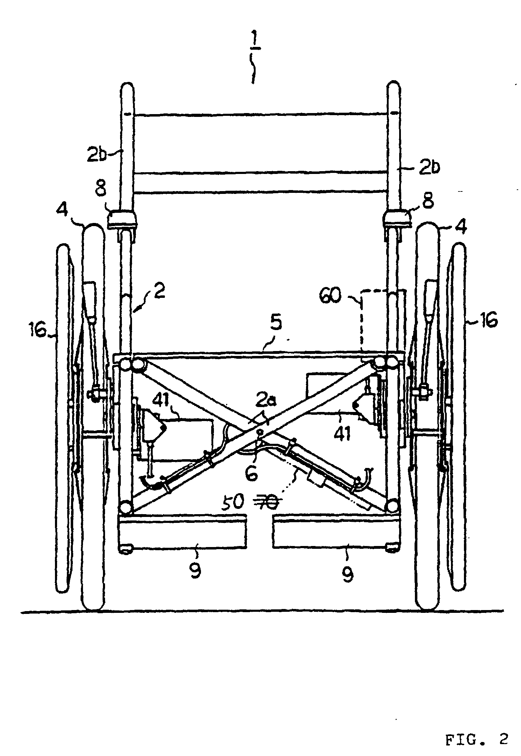

Therefore, the paired left and right power assist systems 40 are arranged in a point symmetry relationship. That is, since the drive motor 41 is set off the centerline of the wheel 13 in each power assist system 40, if such common power assist systems 40 are disposed on the left and right wheels 4 in a point symmetry relationship as shown in Fig. 2, the paired left and right drive motors 41, the most projected portion of this embodiment, are arranged with a height difference therebetween, and will not interfere with each other when the wheelchair 1 is folded as shown in Fig. 3; consequently, the wheelchair can be folded compactly.

On the other hand, a controller 50 for controlling the operation of the power assist system 40 is installed on the front side portion of the frame 2 as shown in Fig. 1, and a battery 60 is installed above the controller 50. The controller 50 may be installed on the cross member 2a of the frame 2 as shown in Fig. 2 in chain lines.

Here is described the structure of the controller 50 referring to Fig. 11.

Fig. 11 is a block diagram showing the structure of the controller 50. The controller 50 includes assist power calculating means 51 for calculating the assist power for the human power applied on the hand rim 16 and detected by the potentiometer 30 and/or the human power applied on the grip 7 (human power applied by the helper) and detected by the potentiometer 34, motor control means 52 for controlling the operation of the drive motor 41 (controlling the current to be fed to the drive motor 41) so that the assist power obtained by assist power calculating means 51 (that is, the target value of the assist power (target torque)) may be reached, and a gate drive circuit 53 which receives control signals from the motor control means 52 and outputs gate signals $G_a$, $G_b$, $G_c$ and $G_d$ having duty values corresponding to the control signals above. In Fig. 11, the numerals $54_a$, $54_b$, $54_c$ and $54_d$ denote FETs (field effect transistors) to be turned on/off when the gate signals $G_a$, $G_b$, $G_c$ and $G_d$ are applied respectively.

Next is described the function of this manual-electric wheelchair.

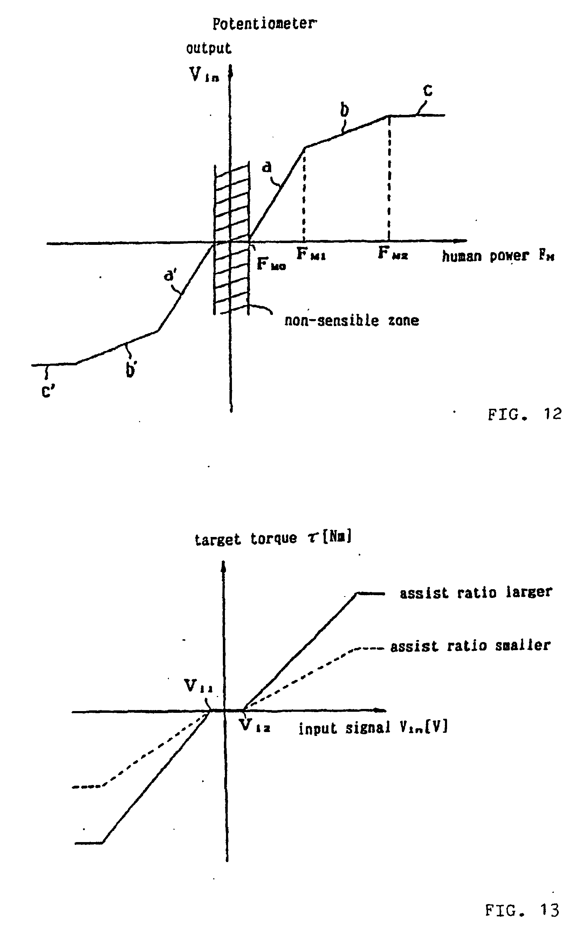

When the rider applies his power on the paired left and right hand rims 16 to rotate them in the, e.g., advancing direction, relative rotation does not occur between the hand rim 16 and the wheel 4 until the magnitude of the human power $F_M$ applied on each hand rim overcomes the precompression force of the three smaller diameter springs 23, and, in this while, the output of the potentiometer 30 is zero as shown in Fig. 12. Fig. 12 is a diagram showing the output characteristics of the potentiometer 30 in regard to the human power $F_M$ applied on the hand rim 16, and $F_{MO}$ in Fig. 12 is a human power value corresponding to the precompression force of three smaller diameter springs 23.

When the human power $F_M$ further increases exceeding $F_{MO}$ thereafter, one pin 27 presses the spring catch 25 to compress only the smaller diameter spring 23 as shown in Fig. 9, and then the hand rim 16 is rotated relative to the wheel 4 by an angle corresponding to the compression amount of the spring 23. The angle of this relative rotation of the hand rim 16 is multiplied and transmitted to the potentiometer 30 through the lever 31, and the potentiometer 30 outputs a signal corresponding to the human power $F_M$ applied on the hand rim 16 as shown with a line a in Fig. 12. Since the spring constant of the smaller diameter spring 23 is smaller, the compression amount of this spring 23 corresponding to the increase of the human power $F_M$, i.e., the rotation angle of the hand rim 16, is larger, therefore, the sensibility of the potentiometer 30 is kept high and it becomes possible for the rider to operate the wheelchair delicately.

When the value of the human power $F_M$ applied on the hand rim 16 reaches $F_{M1}$ shown in Fig. 12, the larger diameter spring 22 also begins to be compressed together with the smaller diameter spring 23, the hand rim 16 is rotated relative to the wheel 4 by an angle corresponding to the compression amount of both springs 22 and 23, and the Potentiometer 30 outputs a signal corresponding to the human power $F_M$ applied on the hand rim 16 as shown with a line b in Fig. 12.

When the human power $F_M$ applied on the hand rim 16 increases thereafter and exceeds a value $F_{M2}$, since the pin 27 comes into contact with the retainer 24 as shown in Fig. 10, the human power $F_M$ is transmitted directly to the wheel 4 through the retainer 24. In this while, the output of the potentiometer is constant as shown with a line c in Fig. 12.

When the rider applies the human power on the hand rim 16 in the reverse direction, the output of the potentiometer 30 is shown with lines a', b' and c' in Fig. 12, and the hatched zone in Fig. 12 constitutes a non-sensible zone. By providing such a non-sensible zone, the stationary state can be surely detected while allowing mechanical and electrical errors.

The human power $F_M$ is intermittently applied on the hand rim 16, and is detected by the potentiometer 30 as described above, and the detection signal here $V_{in}$ is inputted in the assist power calculating means 51 of the controller 50.

The assist power calculating means 51 calculates a target torque $\tau$ for the input signal $V_{in}$ outputted from the potentiometer 30 on the basis of the required assist ratio, and outputs control signals corresponding to it to the motor control means 52. The relationship between the input signal $V_{in}$ and the target torque $\tau$ (characteristics of the assist power calculating means 51) is shown in Fig. 13 using the assist ratio as a parameter. In this embodiment, the target torque $\tau$ becomes zero and an electric non-sensible zone is formed when the value of the $V_{in}$ is between $V_{11}$ and $V_{12}$.

The motor control means 52 controls the electric current to be fed to the drive motor 41, and the gate drive circuit 53, receiving control signals from the motor control means 52, applies gate signals $G_a$ and $G_d$ of necessary duty values on the gates of the FETs 54a and 54d (when advancing). Thereupon, the current from the battery 60 flows in the direction of the arrow in Fig. 11 through the FETs 54a and 54d, and the drive motor 41 is rotated normally by this current. The value $I_b$ of the current flowing through the FET 54d is fed back to the motor control means 52 and is compared with the target value to increase/decrease the duty values of the gate signals $G_a$ and $G_d$.

When the drive motor 41 is normally rotated as described above, the drive power generated by the drive motor 41 is given to the wheel 4 as assist power $F_A$. That is, the rotation of the drive motor 41 is transmitted to the countershaft 43 with a first speed reduction by the gears G1 and G2 shown in Fig. 5, and, while the dog clutch 46 is engaged, the rotation of the countershaft 43 is transmitted to the drive shaft 44 with a second speed reduction by the gears G3 and G4. The rotation of the drive shaft 44 is transmitted, through damper members 45, to the wheel 4 with a third speed reduction by the gears G5 and G6. The wheel 4 is driven for rotation and the wheelchair 1 is advanced by a drive power F obtained by adding the human power $F_M$ and the assist power F ($= F_M + F_A$), and the rider can easily operate the wheelchair 1 with a drive power (human power) $F_M$ as small as one half of the total drive power F.

When a human power $F_M$ in the inverse direction (reversing direction) is applied on the hand rim 16, the gate drive circuit 53 shown in Fig. 11 applies the gate signals $G_b$ and $G_c$ on the FETs 54b and 54c, respectively, to turn them on or off. Then, since the current from the battery 60 flows through the drive motor 41 in the inverse direction, the drive motor 41 rotates inversely, and on the wheel 4 is applied an assist power $F_A$ in the direction for reversing it. The value $I_a$ of the motor current flowing through the FET 54b is fed back to the motor control means 52 and compared with the target value to increase/decrease the duty values of the gate signals $G_b$ and $G_c$.

The human power applied on the grip 7 by a helper is also detected by the potentiometer 34 and an assist power corresponding to this human power is applied on the wheel 4. However, when human powers are applied simultaneously on the hand rim 16 and on the grip 7, an assist power corresponding to either human power of higher priority may be applied on the wheel 4, or assist powers for both human powers may be added.

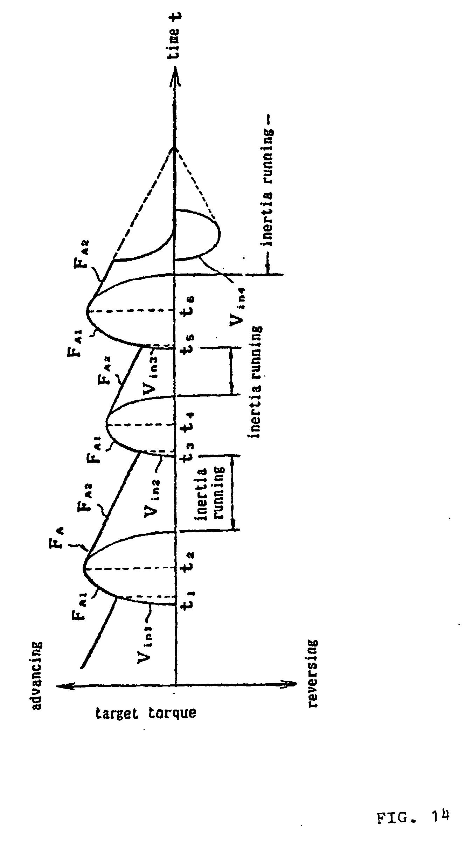

As shown in Fig. 14 showing the change with the passage of time of the target value of the assist power (target torque) calculated by the controller 50, in this embodiment, the assist power $F_A$ is left applied even after the human power $F_M$ applied on the hand rim 16 has been removed. That is, when a human power $F_M$ is applied on the hand rim 16, the potentiometer 30 outputs an input signal $V_{in1}$, and an assist power $F_{A1}$ is applied on the wheel 4 by the controller 50. Then, when the input signal $V_{in1}$ begins to decrease at the time $t_2$, the maxi-

mum value of the input signal $V_{in1}$ is maintained while being damped, and the assist power $F_{A2}$ left applied continues to be applied on the wheel 4.

As described above, since the assist power $F_{A2}$ is left applied and continues to rotate the wheel 4 even after the human power $F_M$ on the wheel 4 is removed, the running distance of the wheelchair 1 for one application of the human power becomes longer, the pitch with which the rider applies the human power on the wheel 4 to rotate it can be longer, and the physical burden on the rider is further lightened.

The polarity of the assist power $F_{A2}$ left applied is kept in the direction of the inputted human power $F_M$ (e.g., advancing direction), and its absolute value $|F_{A2}|$ is damped with time as shown. Since the absolute value $|F_{A2}|$ of the assist power $F_{A2}$ is damped with time as described above, an inertia running feeling similar to that of the conventional manual chairwheel can be given while the wheelchair 1 is being driven.

If an input signal $V_{in2}$ is intermittently outputted because the rider applies a human power $F_M$ on the hand rim 16 next time, when $F_{A2}$ becomes smaller than $V_{in2}$ at the time $t_3$, an assist power $F_{A1}$ corresponding to this input signal $V_{in2}$ is applied on the wheel 4, when the input signal $V_{in2}$ begins to decrease at the time $t_4$, the maximum value of the input signal $V_{in2}$ is maintained while being damped, and the assist power $F_{A3}$ left applied continues to be applied on the wheel 4. Thus, the initial value (e.g., the value at the time $t_2$, $t_4$ and $t_6$ in Fig. 14) of the absolute value $|F_{A2}|$ of the assist power $F_{A2}$ left applied is successively renewed by the maximum value of the human power $F_M$.

Thereafter, if an input signal $V_{in4}$ shown in Fig. 14 is outputted because an inverse direction (reversing direction) human power $F_M$ is applied on the hand rim 16 while the wheelchair 1 is in the inertia running state, since the absolute value $|F_{A2}|$ of the assist power $F_{A2}$ left applied sharply decreases as shown in Fig. 14, because it is obtained as a linear sum of the assist power left applied in the advancing direction and the assist power left applied in the reversing direction; consequently, the inertia running state of the wheelchair 1 is cancelled, and the wheelchair 1 is rapidly brought to a stop.

At least one of the absolute value $|F_{A2}|$ of the assist power $F_{A2}$ left applied and its damping rate may be changed according to the physical strength of the wheelchair user, etc., or may be changed between advancing and reversing.

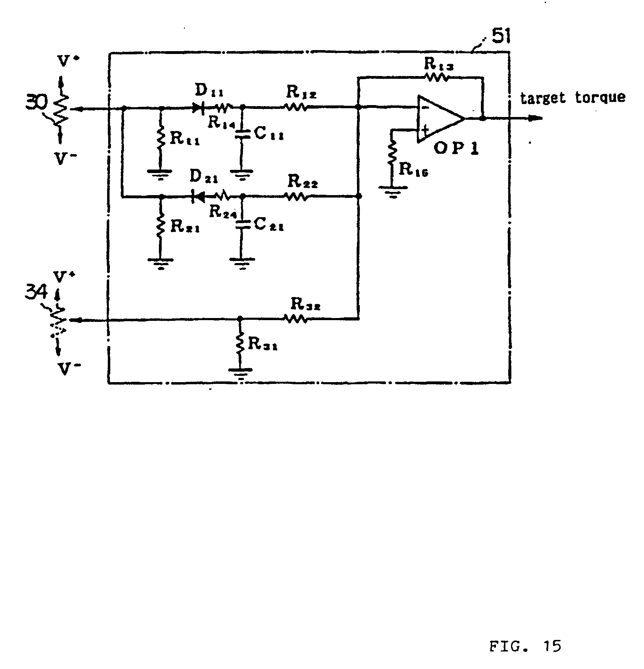

Here is described a practical method for leaving the assist power $F_A$ applied referring to Fig. 15.

Fig. 15 is a circuit structure diagram for the assist power calculating means 51, in which the symbols $C_{11}$ and $C_{21}$ indicate capacitors, $D_{11}$ and $D_{21}$ diodes, and $R_{11}$, $R_{12}$, $R_{13}$, $R_{14}$, $R_{15}$, $R_{21}$, $R_{22}$, $R_{24}$, $R_{31}$, and $R_{32}$ resistors, and OP1 a reversing adder.

The potentiometer 30 is connected to the positive and negative stabilized power sources $V^+$ and $V^-$ at both ends, and mechanically installed so that the output potential is zero when the input of the human power $F_M$ is zero.

When the potentiometer 30 generates a positive potential by the input of the advancing direction human power $F_M$, this generated potential is charged in the capacitor $C_{11}$ through $R_{14}$. Although the capacitor $C_{11}$ continues to be charged while the human power $F_M$ is constant or increasing, if the potential of the potentiometer 30 starts to drop owing to the decrease of the human power $F_M$, inverse current is prevented by the action of the diode $D_{11}$, and the capacitor $C_{11}$ functions to memorize the maximum (peak) value of the potential.

On the other hand, since the capacitor $C_{11}$ is discharging its charge through the resistor $R_{12}$, the terminal potential of the capacitor $C_{11}$ drops with time.

By the action above, when an advancing human power $F_M$ is applied, an assist power $F_A$ is applied in an assist ratio determined by $R_{12}$ and $R_{13}$ until the human power $F_M$ reaches its maximum and, thereafter, when the human power begins to decrease, the maximum value of the assist power $F_A$ is maintained while being damped, and the assist power $F_A$ is left applied even after the human power $F_M$ is removed. The time during which the assist power $F_A$ is left applied can be adjusted at will by the capacity of the capacitor $C_{11}$ and the value of the resistor $R_{12}$, and, in this embodiment, this time is adjustable between 2 and 5 seconds according to the riders' conditions.

When the human power $F_M$ is applied in the reversing direction, the assist power $F_A$ is left applied by the potential peak holding and slow releasing function constructed with a diode $D_{21}$, capacitor $C_{21}$, and resistors $R_{22}$ and $R_{24}$ even after the human power $F_M$ is removed.

On the other hand, the reversing adder OP1 linearly adds the potentials of the capacitors $C_{11}$ and $C_{12}$ in a ratio determined by the input resistors $R_{12}$ and $R_{22}$, and the assist ratio in the advancing direction is determined by input resistors $R_{12}$ and $R_{13}$, while the assist ratio in the reversing direction is determined by input resistors $R_{22}$ and $R_{13}$. For example, when $R_{12} = R_{22}$, the assist ratios for advancing and reversing become equal to each other, and, when equal human powers $F_M$ are applied in advancing and reversing directions respectively in a short while, although potentials are memorized in each of the capacitors $C_{11}$ and $C_{12}$, since they are added by the reversing adder OP1 as positive and negative potentials of equal amount, the output of the target torque finally becomes almost zero.

In some cases, it is desirable to change the assist ratios between advancing and reversing according to the conditions such as physical strength of the rider, etc. In such cases, it is recommended to change the ratio of resistors $R_{12}$ and $R_{22}$.

Hereupon, since the potential of the potentiometer 34 for detecting the human power applied by the helper is added directly to the reversing adder OP1 by

the input resistor $R_{32}$, the assist power applied according to the human power of the helper will not be left applied after the human power is removed.

It becomes possible to set the assist ratio according to the physical strength of the helper by changing the value of the input resistor $R_{32}$.

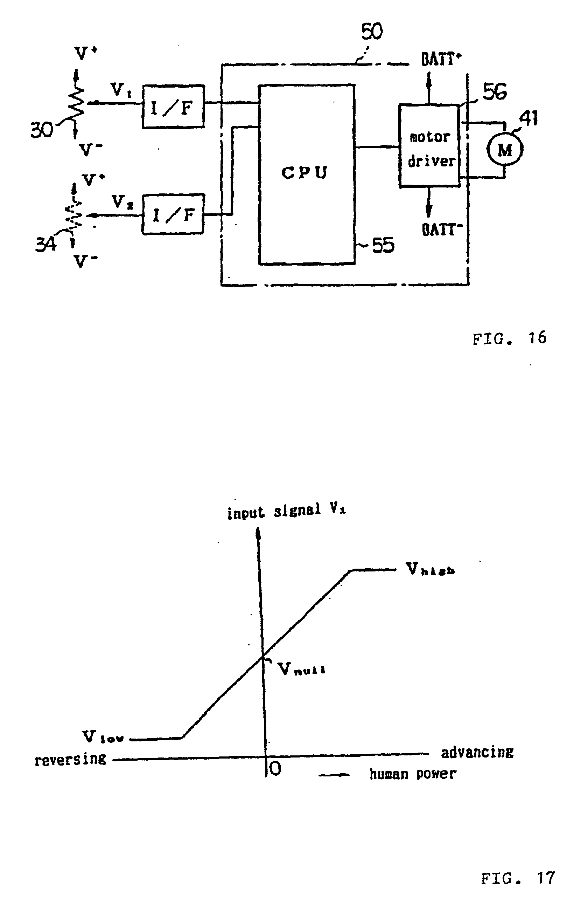

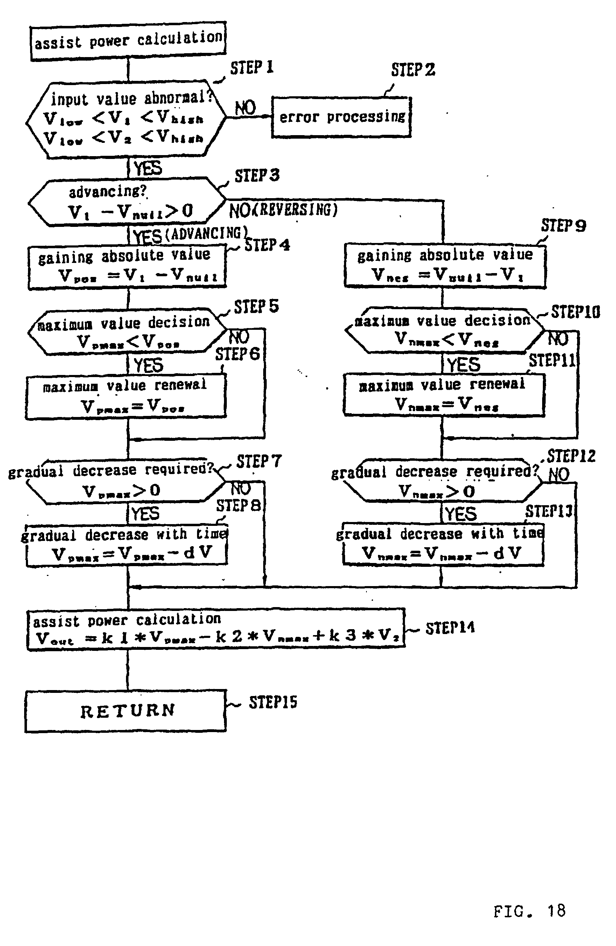

Next, another embodiment of the practical method for leaving the assist power applied is described referring to Figs. 16 through 18. Fig. 16 is a block diagram showing the structure of the controller 50, Fig. 17 is a diagram showing the characteristics of input signals, and Fig. 18 is a flow chart showing the assist power calculating process.

In this embodiment, as shown in Fig. 16, the controller 50 includes a CPU 55 and a motor driver 56, and the human powers detected by the potentiometers 30 and 34 are inputted in CPU 55 through interfaces I/F.

When signals from the potentiometers 30 and 34 are inputted, the CPU 55 carries out the assist power calculation process shown in Fig. 18.

At STEP 1 in Fig. 18, it is decided whether the values of the input signals $V_1$ from the potentiometer 30 and the input signals $V_2$ from the potentiometer 34 are normal or not, that is, whether the values of the input signals $V_1$ and $V_2$ are included in the predetermined range $V_{low} \sim V_{high}$ ($V_{low} < V_1 < V_{high}$ and $V_{low} < V_2 < V_{high}$) or not, then, when included, it is decided whether the vehicle is advancing or reversing at STEP 3 in Fig. 18. If the input signal $V_1$ or $V_2$ deviates from the predetermined range showing abnormal values, the error is processed at STEP 2 in Fig. 18.

When deciding whether the vehicle is advancing or reversing as described above, it is decided whether the input signal $V_1$ is larger than $V_{null}$ (See Fig. 17) or not, and it is decided that the vehicle is advancing if $V_1$ is larger than $V_{null}$ ($V_1 - V_{null} > 0$), while it is decided that the vehicle is reversing if $V_1$ is smaller than $V_{null}$ ($V_1 - V_{null} < 0$).

If it is decided that the vehicle is advancing because $V_1 - V_{null} > 0$, the absolute value $V_{pos}$ of the input signal $V_1$ is obtained by

$$V_{pos} = V_1 - V_{null} \qquad (1)$$

(STEP 4 in Fg. 18), it is decided whether this absolute value $V_{pos}$ larger than the maintained maximum value $V_{pmax}$ or not ($V_{pmax} < V_{pos}$) (STEP 5 in Fig. 18), if larger, the maximum value $V_{pmax}$ is renewed by this absolute value $V_{pos}$ ($V_{pmax} = V_{pos}$) (STEP 6 in Fig. 18), and, if smaller, the maximum value $V_{pmax}$ is not renewed.

Next, it is decided whether the gradual decrease (damping with time) of the maximum value $V_{pmax}$ is required or not by $V_{pmax} > 0$ (STEP 7 in Fig. 18), and, if $V_{pmax} > 0$, it is decided that $V_{pmax}$ is required to be gradually decreased, and the maximum value $V_{pmax}$ is decreased by dV according to the following equation (STEP 8 in Fig. 18):

$$V_{pmax} = V_{pmax}\text{-}dV \qquad (2).$$

Here, if $V_{pmax} \leqq 0$, it is decided that the gradual decrease of the maximum value $V_{pmax}$ is not required, and the maximum value $V_{pmax}$ is maintained. The absolute value of the maximum value $V_{pmax}$ at this instance is very small and is included within the electric non-sensible zone $V_{11} \sim V_{12}$ shown in Fig. 13, and the wheelchair 1 is at rest and the wheel will not rotate inversely.

On the other hand, when it is decided that the vehicle is reversing because $V_1 - V_{null} < 0$, the absolute value $V_{neg}$ of the input signal $V_1$ is obtained by

$$V_{neg} = V_{null} - V_1 \qquad (3),$$

(STEP 9 in Fig. 18), it is decided whether this absolute value $V_{neg}$ is larger than the maintained maximum value $V_{nmax}$ or not ($V_{nmax} < V_{neg}$) (STEP 10 in Fig. 18), if larger, the maximum value $V_{nmax}$ is renewed by this absolute value $V_{neg}$ ($V_{nmax} = V_{neg}$) (STEP 11 in Fig. 18), and, if smaller, the maximum value $V_{nmax}$ is not renewed.

Next, it is decided whether the gradual decrease (damping with time) of the maximum value $V_{nmax}$ is required or not by $V_{nmax} > 0$ (STEP 12 in Fig. 18), and, if $V_{nmax} > 0$, it is decided that the maximum value $V_{nmax}$ is required to be gradually decreased, and the maximum value $V_{nmax}$ is decreased by dV according to the following equation (STEP 13 in Fig. 18):

$$V_{nmax} = V_{nmax} - dV \qquad (4).$$

Here, if $V_{nmax} \leqq 0$, it is decided that the gradual decrease of the maximum value $V_{nmax}$ is not required, and the maximum value $V_{nmax}$ is maintained.

When maximum values for advancing and reversing $V_{pmax}$ and $V_{nmax}$ are obtained as described above, the assist power Vmjt is obtained according to the following equation (STEP 14 in Fig. 18).

$$V_{out} = k1 * V_{pmax} - k2 * V_{nmax} + k3 * V_2 \qquad (5),$$

where: k1, k2 and k3 are constant or variable coefficients, and
$V_2$ is an input signal from the potentiometer 34.

Hereupon, since the processes above are always repeated (STEP 15 in Fig. 18) and the maximum values $V_{pmax}$ and $V_{nmax}$ are decreased with time according to the equations (2) and (4) above, although the assist power which is damped with time is still left applied for the human power applied on the hand rim 16 even after the human power is removed, the assist power is not left applied for the human power applied by the helper.

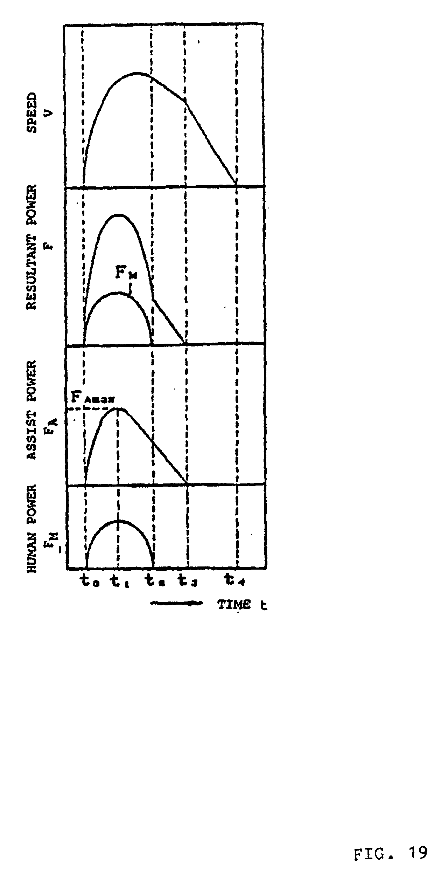

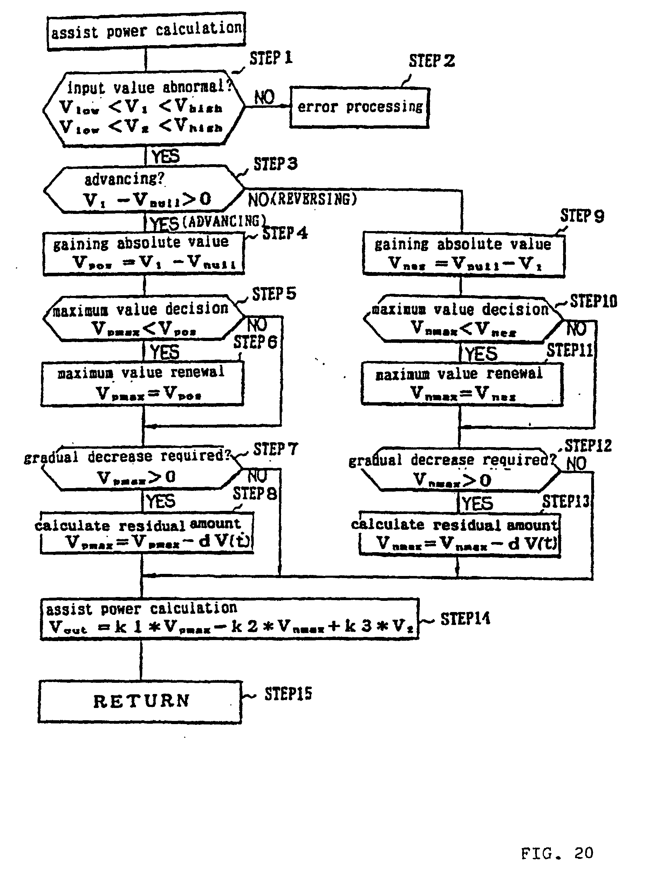

Changes in the speed v of the wheelchair 1, resultant drive power F, assist power $F_A$ and human power $F_M$ with time are shown in FIG. 19 for the embodiment described above. In the embodiment, the assist power, after reaching its maximum value of $F_{Amax}$, is gradually reduced with time at an approximately fixed rate. Namely, the value dV to be subtracted from the maximum values $V_{pmax}$, $V_{nmax}$ of the absolute values $V_{pos}$, $V_{neg}$ of the input signal $V_1$ from the potentiometer 30 (refer to equations (2) and (4)) was constant (dV = constant). After the time $t_3$ at which the resultant drive power F (assist power $F_A$) becomes zero, the speed v of the wheelchair 1 is gradually reduced by the road surface resistance and load by the reverse drive from the wheel 4 side of the assist power device 40 including the drive motor 41, and the wheel chair 1 stops at the time $t_4$. However, the value dV may be changed with time. That is to say, by expressing the dV as dV(t) or a function of time, $V_{pmax}$, $V_{nmax}$ may be calculated from the equations below instead of the equations (2), (4) in the calculation of residual amount of the assist power $F_A$ (Refer to STEPS 8 and 13 in FIG. 20). FIG. 20 is a flow chart similar to FIG. 18 and shows the assist power calculation process.

$$V_{pmax} = V_{pmax} - dV(t) \qquad (2)'$$

$$V_{nmax} = V_{nmax} - dV(t) \qquad (4)'$$

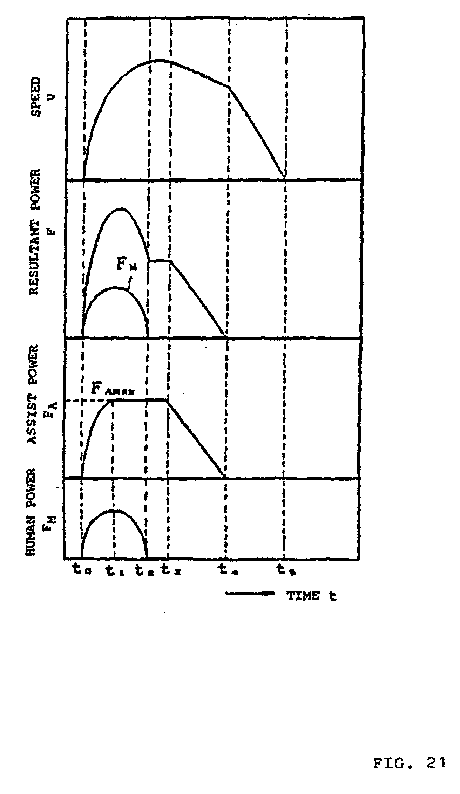

Specific example of control method for the assist power $F_A$ (namely how to set the dV(t)) will be described in reference to FIGs. 21 through 24. FIGs. 21 through 24 are similar to FIG. 19 and show the changes in the speed v of the wheelchair 1, resultant power F, assist power $F_A$, and human power $F_M$ with time.

In the example shown in FIG. 21, the assist power $F_A$ is maintained approximately at its maximum value $F_{Amax}$ ($F_A = F_{Amax}$) for a fixed duration from the time $t_1$ when the assist power reaches its maximum value to the time $t_3$, and then gradually reduced by an approximately constant rate from the maximum value $F_{Amax}$. In other words, the dV(t) is set with time as described below.

$$\text{time } t_1 - t_3\text{: } dV(t) \equiv 0$$

$$\text{time } t_3 - t_4\text{: } dV(t) \equiv \text{constant}$$

When the assist power $F_A$ is maintained at the maximum value $F_{Amax}$ for a fixed duration as described above, the wheelchair can be driven with a smaller human power $F_M$, and going up a grade becomes easier. In this embodiment too, after the time $t_4$ at which the resultant drive power F (assist power $F_A$) becomes zero, the speed v of the wheelchair 1 is gradually reduced by the road surface resistance and load by the reverse drive of the assist power device 40, and the wheel chair 1 stops at the time $t_5$.

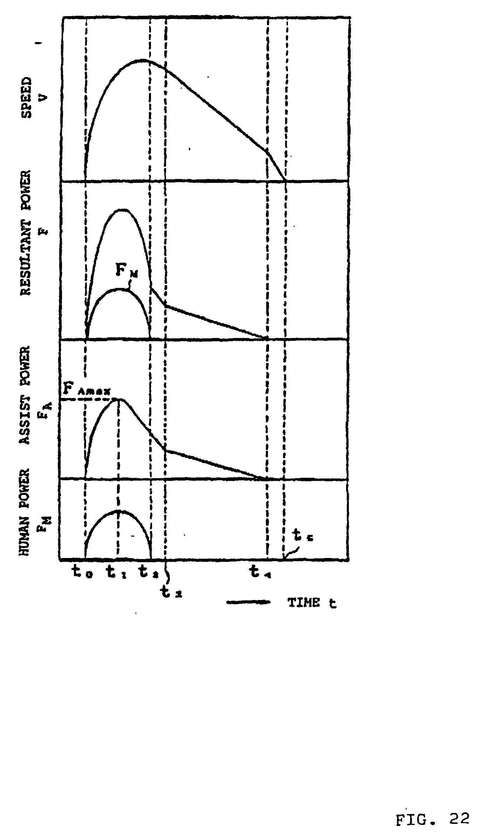

In the example shown in FIG. 22, the gradual reduction rate of the assist power $F_A$ is changed halfway; the gradual reduction rate of the assist power $F_A$ for the duration $t_1$ - $t_3$ is set larger that that for the duration $t_3$ - $t_4$. Therefore, the value of dV(t) for the duration $t_1$ - $t_3$ is set larger that that for the duration $t_3$ - $t_4$.

When the gradual reduction rate of the assist power $F_A$ is changed halfway, drive feeling nearer to that of a manual wheelchair is obtained and operation becomes easier and simpler, In this embodiment too, after the time $t_4$ at which the resultant drive power F (assist power $F_A$) becomes zero, the speed v of the wheelchair 1 is gradually reduced by the road surface resistance and load by the reverse drive of the assist power device 40, and the wheel chair 1 stops at the time $t_5$. While the gradual reduction rate of the assist power $F_A$ is changed in two steps in this embodiment, it may be changed in three or more steps or along a continuous line.

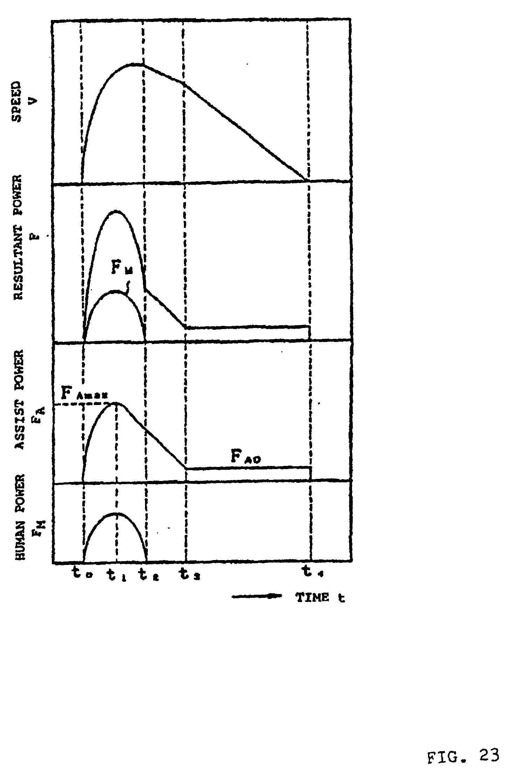

In the example shown in FIG. 23, the assist power $F_A$ is gradually reduced at approximately constant rate from the time $t_1$ to $t_3$, and maintained approximately at $F_{A0}$ after the time $t_3$ to the time $t_4$ when the wheelchair 1 stops. In other words, dV(t) is set relative to time as described below.

$$\text{time } t_1 \text{ - } t_3 : dV(t) \equiv \text{constant}$$

$$\text{time } t_3 \text{ - } t_4 : dV(t) \equiv 0$$

The value $F_{A0}$ of the assist power $F_A$ which is maintained approximately constant is an amount commensurate with a reverse drive of the assist power device 40, and a current commensurate with that amount flows through the drive motor 41 (Refer to FIGs. 4 and 5). Of course, the assist power $F_A$ may be gradually reduced along a curve from the time $t_1$ to $t_3$, or the value $F_{A0}$ may changed with a small gradient.

When the assist power $F_A$ is gradually reduced and maintained at a specified value of $F_{A0}$, the load by the reverse drive of the assist drive device 40 is offset by the assist power $F_{A0}$, and the speed v of the wheelchair 1 decreases gradually and becomes zero at the time $t_4$. As a result, a coasting feeling the same with that of a manual wheel chair in which no assist power device 40 is provided is obtained, excessive assist power $F_A$ is not produced, energy is saved, and range of the wheelchair is extended.

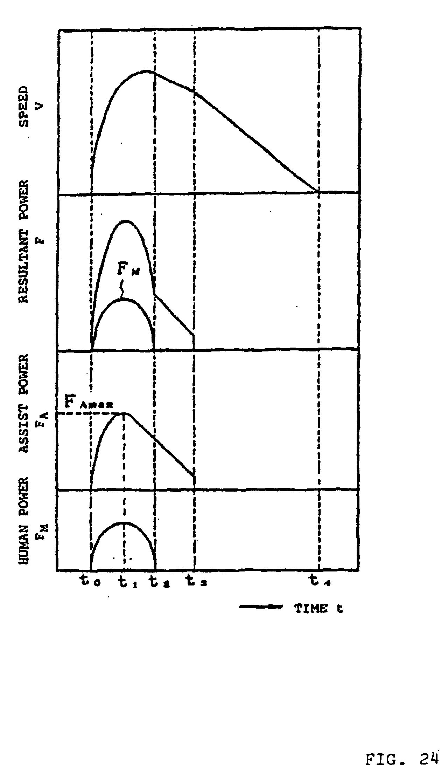

In the example shown in FIG. 24, in order to obtain the same effect as described above, a clutch is provided and the clutch is disengaged simultaneously with turning off of the motor drive, so that the reverse drive power is prevented from being transmitted from the wheel side to the motor side.

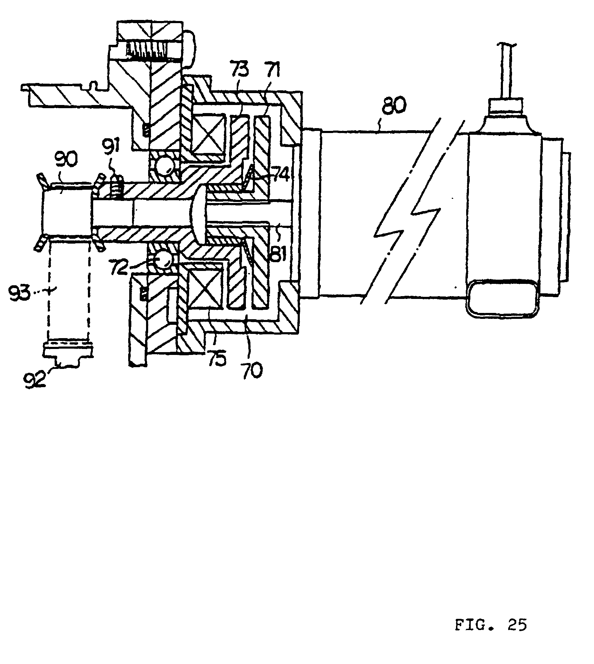

Here, an example using an electromagnetic clutch will be described in reference to FIG. 25. A mechanical clutch or the like may also be used.

FIG. 25 is a cross-sectional view of the motor area of the assist power device. As shown, an electromagnetic clutch 70 is interposed between a drive motor 80 and a pulley 90, and comprises; a slider 71 slidably fit through splines over an output shaft 81 of the drive motor 80, a clutch plate 73 freely rotatably supported with a bearing 72, a plate spring 74 interposed between the clutch plate 73 and the slider 71 and for urging the slider 71 in the direction away from the clutch plate 73, and a solenoid coil 75.

The pulley 90 is secured to the end of the clutch plate 73 by a screw 91. A drive belt 93 is routed between the pulley 90 and a pulley 92 connected to a wheel (not shown).

When human power $F_M$ is input, the electromagnetic clutch 70 is engaged, the drive motor 80 starts to drive, rotation of the output shaft 81 of the drive motor 80 is transmitted through the electromagnetic clutch 70 to the pulley 90, and further transmitted to the drive belt 93, pulley 92, through a drive train (not shown) to the wheel, and an assist power $F_A$ is given to the wheel.

While the assist power $F_A$ produced in the drive motor 80 reaches its maximum value $F_{Amax}$ as shown in FIG. 24 at the time $t_1$ and then gradually decreases, the clutch 70 remains engaged.

After that at the time $t_3$ shown in FIG. 24, the drive motor 80 is de-energized and stopped to disengage the electromagnetic clutch 70. Therefore, after the time $t_3$, the assist power $F_A$ is not given to the wheel, and since the clutch 70 is disengaged and the transmission of reverse drive power from the wheel to the drive motor 80 is shut off, the wheelchair 1 moves forward by inertia force like a manual wheelchair without an assist power device, and its speed v gradually reduced by road surface resistance and stops at the time $t_4$.

While specific examples of setting dV(t) are presented above, this invention is not limited to those but their combinations or other features may be added.

Although the description above is particularly for the manual-electric wheelchairs, this invention can be of course applied to other vehicles such as bicycles, pedal boats, and the like.

As is clear from the description above, since the assist power is left applied to drive the propelling means even after the human power applied on the propelling means is removed, the running distance for one application of human power becomes longer and the pitch of human power application can be longer, which is effective for further lightening the burden on the vehicle user.

According to the embodiments described above it is possible to give the vehicle running an inertia running feeling similar to that of ordinary vehicles, and the rider will not be given feeling of disorder.

Further, an effect is obtained that, if the rider applies a human power in the inverse direction on the propelling means while the vehicle is in the inertia running state, the inertia running of the vehicle is cancelled and the vehicle can be rapidly brought to a stop.

Moreover an effect is obtained that the magnitude, etc., of the assist power can be changed at will according to the physical strength of the rider or the vehicle running direction, and the rider's needs can be flexibly coped with.

## Claims

1. Power assisted vehicle comprising a human power driving system (16;7) for driving said vehicle by means of human power, an auxiliary driving system (40) for driving said vehicle in support of said human power, and control means (50) for controlling the auxiliary power output of said auxiliary driving system (40) in response to a magnitude of human power applied to said human power driving system (16; 7), **characterized in that** said control means (50) is provided for controlling said auxiliary driving system (40) to continue to apply said auxiliary power to said vehicle for a period of time regardless of the existence of vehicle speed after the supply of human power is stopped.

2. Vehicle according to claim 1, **characterized in that** said control means (50) comprises reduction means $(D_{11}, C_{11}, R_{12}, R_{14})$ for reducing the auxiliary power after the supply of human power is stopped.

3. Vehicle according to claim 1 or 2, **characterized in that** said reduction means $(D_{11}, C_{11}, R_{12}, R_{14})$ is adapted to reduce the auxiliary power applied when the human power has reached its maximum value during one cycle of human power supply.

4. Vehicle according to at least one of claims 1 to 3, **characterized in that** said control means (50) is adapted to interrupt a reduction of the applied auxiliary power when human power is applied again and exceeds a value corresponding to the current auxiliary power in accordance with said reduction of the applied auxiliary power, and to increase again the auxiliary power in accordance with said human power.

5. Vehicle according to at least one of claims 1 to 4, **characterized in that** the absolute value of the auxiliary power and/or the reduction rate are variable.

6. Vehicle according to at least one of claims 1 to 5, **characterized in that** the direction of the auxiliary power corresponds with the human power for accelerating or decelerating the vehicle, respectively.

7. Vehicle according to at least one of the claims 1 to 6, **characterized in that** said reduction means includes an adding section (OP1) for summing up the current value of the auxiliary power according to a reduction process in accordance with human power applied during a first interval for advancing the vehicle and the value of the auxiliary power in accordance with human power applied during a second interval for reversing the vehicle.

8. Vehicle according to at least one of the claims 1 to 7, **characterized in that** said reduction means is adapted to maintain the auxiliary power approximately at its maximum value ($F_{AMAX}$) for a fixed period from the time ($t_1$) when said auxiliary power reaches its maximum value and after said period to reduce said auxiliary power at a substantially constant reduction rate.

9. Vehicle according to at least one of claims 1 to 8, **characterized in that** a relation for determining the auxiliary power for advancing the vehicle in response to human power is different from a relation for determining the auxiliary power for reversing the vehicle.

10. Vehicle according to at least one of claims 1 to 9, **characterized in that** the auxiliary driving system (40) includes a pair of drive motors (41) independent from each other for driving left and right wheels (4) of the vehicle independently from each other, and said control means (50) includes a pair of motor control means (52) for controlling the auxiliary power output of each of said drive motors (41) in accordance with human power applied to the respective wheel (4).

11. Vehicle according to at least one of the claims 1 to 10, **characterized in that** said control means (50) is connected with a first detection means (30) for detecting human power directly applied to said left and right wheels (4) and a second detection means (34) for detecting human power applied to right and left sides (7,7) of a frame assembly (2) of said vehicle.

12. Vehicle according to at least one of claims 1 to 11, **characterized by** a clutch system (46) being operable by a driver of said vehicle and being capable of mechanically connecting and disconnecting said driving wheels (4) to/from said auxiliary driving system (40).

**13.** Method for driving a power assisted vehicle, particularly a wheelchair, comprising a human power driving system (16;7) and an auxiliary driving system (40) wherein said method comprises the steps of:

applying human power to said vehicle in intervals to initially drive said vehicle, and
applying auxiliary power, particularly, electric power to said vehicle to drive said vehicle in support of said human power,

**characterized in that** the method further comprises the step of continuing to apply said auxiliary power to said vehicle for a period of time regardless of a vehicle speed, after the supply of human power has been stopped.

**14.** Method according to claim 13, **characterised in that** the auxiliary power is increased in accordance with an increase in the human power supply and, when reaching a maximum value, the auxiliary power is successively reduced in accordance with a prescribed reduction rate.

**15.** Method according to claim 14, **characterized in that** the auxiliary power is increased again in accordance with said human power when said human power exceeds a value corresponding to the current auxiliary power in accordance with a current reduction process applying to the vehicle during said period of time.

**16.** Method according to at least one of claims 13 to 15, **characterized in that** the auxiliary power is maintained approximately at its maximum value ($F_{AMAX}$) for a fixed period from the time ($t_1$) when said auxiliary power reaches its maximum value and after said period said auxiliary power is gradually reduced from its maximum value at a substantially constant reduction rate.

**Patentansprüche**

**1.** Energieunterstütztes Fahrzeug mit einem Menschenkraft- Antriebssystem (16; 7) zum Antreiben des Fahrzeuges mittels Menschenkraft, einem Hilfsantriebssystem (40) zum Antreiben des Fahrzeuges in Unterstützung der Menschenkraft, und einer Steuereinrichtung (50), um die Hilfsenergieabgabe des Hilfsantriebssystems (40) in Abhängigkeit von einer Größe der Menschenkraft, die auf das Menschenkraftantriebssystem (16; 7) einwirkt, zu steuern, **dadurch gekennzeichnet, dass** die Steuereinrichtung (50) vorgesehen ist, um das Hilfsantriebssystem (40) zu steuern, um die Hilfsenergie kontinuierlich auf das Fahrzeug für eine Zeitdauer anzuwenden, unabhängig von der Existenz der Fahrzeuggeschwindigkeit, nachdem die Zuführung der Menschenkraft gestoppt ist.

**2.** Fahrzeug nach Anspruch 1, **dadurch gekennzeichnet, dass** die Steuereinrichtung (50) eine Reduktionseinrichtung ($D_{11}$, $C_{11}$, $R_{12}$, $R_{14}$) aufweist, um die Hilfsenergie zu reduzieren, nachdem die Zuführung der Menschenkraft gestoppt ist.

**3.** Fahrzeug nach Anspruch 1 oder 2, **dadurch gekennzeichnet, dass** die Reduktionseinrichtung ($D_{11}$, $C_{11}$, $R_{12}$, $R_{14}$) vorgesehen ist, die angewandte Hilfsenergie zu reduzieren, wenn die Menschenkraft ihren Maximalwert während eines Zyklus der Menschenkraftzuführung erreicht hat.

**4.** Fahrzeug nach zumindest einem der Ansprüche 1 bis 3, **dadurch gekennzeichnet, dass** die Steuereinrichtung (50) vorgesehen ist, eine Reduktion der angewandten Hilfsenergie zu unterbrechen, wenn die Menschenkraft wieder angewandt wird und einen Wert übersteigt, der der momentanen Hilfsenergie in Übereinstimmung mit der Reduktion der angewandten Hilfsenergie entspricht und um die Hilfsenergie wieder in Übereinstimmung mit der Menschenkraft zu erhöhen.

**5.** Fahrzeug nach zumindest einem der Ansprüche 1 bis 4, **dadurch gekennzeichnet, dass** der Absolutwert der Hilfsenergie und / oder die Reduktionsrate variabel sind.

**6.** Fahrzeug nach zumindest einem der Ansprüche 1 bis 5, **dadurch gekennzeichnet, dass** die Richtung der Hilfsenergie jeweils mit der Menschenkraft, um das Fahrzeug jeweils zu beschleunigen oder zu abzubremsen, übereinstimmt.

**7.** Fahrzeug nach zumindest einem der Ansprüche 1 bis 6, **dadurch gekennzeichnet, dass** die Reduktionseinrichtung einen Addierabschnitt (OP1) enthält, zum Aufsummieren des Momentanwertes der Hilfsenergie entsprechend eines Reduktionsprozesses, in Übereinstimmung mit der angewandten Menschenkraft während eines ersten Intervalls zum Vorwärtsbewegen des Fahrzeuges und des Wertes der Hilfsenergie in Übereinstimmung mit der Menschenkraft, angewandt während eines zweiten Intervalls, um das Fahrzeug zurück zu bewegen.

**8.** Fahrzeug nach zumindest einem der Ansprüche 1 bis 7, **dadurch gekennzeichnet, dass** die Reduktionseinrichtung vorgesehen ist, die Hilfsenergie ungefähr bei ihrem Maximalwert ($F_{AMAX}$) für eine feststehende Dauer ab der Zeit ($t_1$) beizubehalten, wenn die Hilfsenergie ihren Maximalwert erreicht und nach diesem Zeitraum, um die Hilfsenergie mit einer im wesentlichen konstanten Reduktionsrate zu reduzieren.

**9.** Fahrzeug nach zumindest einem der Ansprüche 1 bis 8, **dadurch gekennzeichnet, dass** eine Beziehung zum Bestimmen der Hilfsenergie zum Vorwärtsbewegen des Fahrzeuges in Abhängigkeit von der Menschenkraft verschieden ist von einer Beziehung zum Bestimmen der Hilfsenergie, um das Fahrzeug rückwärts zu bewegen.

**10.** Fahrzeug nach zumindest einem der Ansprüche 1 bis 9, **dadurch gekennzeichnet, dass** das Hilfsantriebssystem (40) ein Paar von unabhängigen Antriebsmotoren (41) enthält, um das rechte und das linke Rad (4) des Fahrzeuges unabhängig voneinander anzutreiben, und die Steuereinrichtung (50) ein Paar von Motorsteuereinrichtungen (52) enthält, um die Hilfsenergieabgabe von jedem der Antriebsmotoren (41) in Übereinstimmung mit der auf das jeweilige Rad (4) angewandte Menschenkraft zu steuern.

**11.** Fahrzeug nach zumindest einem der Ansprüche 1 bis 10 **dadurch gekennzeichnet, dass** die Steuereinrichtung (50) mit einer ersten Erfassungseinrichtung (30) verbunden ist, um die auf das linke und rechte Rad (4) direkt angewandte Menschenkraft zu erfassen, und eine zweite Erfassungseinrichtung (34), um die auf die linke und rechte Seite (7, 7) einer Rahmenanordnung (2) des Fahrzeuges angewandte Menschenkraft zu erfassen.

**12.** Fahrzeug nach zumindest einem der Ansprüche 1 bis 11, **gekennzeichnet durch** ein Kupplungssystem (46), das **durch** einen Fahrer des Fahrzeuges bedienbar ist und das in der Lage ist, die Antriebsräder (4) mit dem Hilfsantriebssystem (40) mechanisch zu verbinden oder von diesem zu lösen.

**13.** Verfahren zum Antreiben eines energieunterstützten Fahrzeuges, insbesondere eines Rollstuhles, mit einem Menschenkraftantriebssystem (40), wobei das Verfahren die Schritte aufweist von:

Anwenden von Menschenkraft auf das Fahrzeug in Intervallen, um das Fahrzeug anfänglich anzutreiben, und Anwenden der Hilfskraft, insbesondere Elektroenergie, auf das Fahrzeug, um das Fahrzeug in Unterstützung der Menschenkraft anzutreiben,

**dadurch gekennzeichnet, dass** das Verfahren außerdem den Schritt aufweist die Anwendung der Hilfsenergie auf das Fahrzeug ungeachtet einer Fahrzeuggeschwindigkeit für eine Zeitdauer fortzusetzen, nachdem die Zuführung der Menschenkraft gestoppt worden ist.

**14.** Verfahren nach Anspruch 13, **dadurch gekennzeichnet, dass** die Hilfsenergie in Übereinstimmung mit einer Erhöhung in der Menschenkraftzuführung erhöht wird und, wenn ein Maximalwert erreicht ist, die Hilfsenergie allmählich in Übereinstimmung mit einer vorgeschriebenen Reduktionsrate reduziert wird.

**15.** Verfahren nach Anspruch 14, **dadurch gekennzeichnet, dass** die Hilfsenergie in Übereinstimmung mit der Menschenkraft erhöht wird, wenn die Menschenkraft einen Wert übersteigt, der der momentanen Hilfsenergie in Übereinstimmung mit einem momentanen Reduktionsvorgang der auf das Fahrzeug während der Zeitdauer angewandt wird, entspricht.

**16.** Verfahren nach zumindest einem der Ansprüche 13 bis 15 **dadurch gekennzeichnet, dass** die Hilfsenergie ungefähr bei ihrem Maximalwert ($F_{AMAX}$) für eine feststehende Dauer gehalten wird, ab der Zeit ($t_1$), wenn die Hilfsenergie ihren Maximalwert erreicht, und dass nach dem Zeitraum die Hilfsenergie mit einer im wesentlichen konstanten Reduktionskonstante allmählich von ihrem Maximalwert reduziert wird.

## Revendications

**1.** Véhicule à propulsion assistée comprenant un système d'entraînement à propulsion humaine (16 ; 7) pour entraîner ledit véhicule au moyen d'une puissance humaine, un système d'entraînement auxiliaire (40) pour entraîner ledit véhicule en soutien de ladite puissance humaine, et des moyens de commande (50) pour commander la sortie de puissance auxiliaire dudit système d'entraînement auxiliaire (40) en réponse à une magnitude de puissance humaine appliquée audit système d'entraînement à propulsion humaine (16 ; 7), **caractérisé en ce que** lesdits moyens de commande (50) sont prévus pour commander ledit système d'entraînement auxiliaire (40) de manière à continuer à appliquer ladite puissance auxiliaire audit véhicule pendant une certaine période de temps, indifféremment de l'existence d'une vitesse du véhicule après que la fourniture de la puissance humaine ait cessé.

**2.** Véhicule selon la revendication 1, **caractérisé en ce que** lesdits moyens de commande (50) comprennent des moyens de réduction ($D_{11}$, $C_{11}$, $R_{12}$, $R_{14}$) pour réduire la puissance auxiliaire après que la fourniture de la puissance humaine ait cessé.

**3.** Véhicule selon la revendication 1 ou 2, **caractérisé en ce que** lesdits moyens de réduction ($D_{11}$, $C_{11}$, $R_{12}$, $R_{14}$) sont adaptés pour réduire la puissance auxiliaire appliquée lorsque la puissance humaine a atteint sa valeur maximale pendant un cycle de fourniture de la puissance humaine.

4.  Véhicule selon au moins l'une des revendications 1 à 3, **caractérisé en ce que** lesdits moyens de commande (50) sont adaptés pour interrompre une réduction de la puissance auxiliaire appliquée lorsque la puissance humaine est appliquée à nouveau et excède une valeur correspondant à la puissance auxiliaire courante conformément à ladite réduction de la puissance auxiliaire appliquée, et pour augmenter à nouveau la puissance auxiliaire conformément à ladite puissance humaine.

5.  Véhicule selon au moins l'une des revendications 1 à 4, **caractérisé en ce que** la valeur absolue de la puissance auxiliaire et/ou le taux de réduction sont variables.

6.  Véhicule selon au moins l'une des revendications 1 à 5, **caractérisé en ce que** le sens de la puissance auxiliaire correspond à la puissance humaine pour accélérer ou ralentir le véhicule, respectivement.

7.  Véhicule selon au moins l'une des revendications 1 à 6, **caractérisé en ce que** lesdits moyens de réduction comprennent une section d'addition (OP1) pour additionner la valeur actuelle de la puissance auxiliaire selon un processus de réduction conformément à la puissance humaine appliquée pendant un premier intervalle pour faire avancer le véhicule et la valeur de la puissance auxiliaire conformément à la puissance humaine appliquée pendant un deuxième intervalle pour faire circuler le véhicule en marche arrière.

8.  Véhicule selon au moins l'une des revendications 1 à 7, **caractérisé en ce que** lesdits moyens de réduction sont adaptés pour maintenir la puissance auxiliaire approximativement à sa valeur maximale ($F_{AMAX}$) pendant une période fixe à partir de l'instant ($t_1$) où ladite puissance auxiliaire atteint sa valeur maximale et après ladite période pour réduire ladite puissance auxiliaire avec un taux de réduction sensiblement constant.

9.  Véhicule selon au moins l'une des revendications 1 à 8, **caractérisé en ce qu'**une relation destinée à déterminer la puissance auxiliaire afin de faire avancer le véhicule en réponse à une puissance humaine est différente d'une relation destinée à déterminer la puissance auxiliaire afin de faire circuler le véhicule en marche arrière.

10. Véhicule selon au moins l'une des revendications 1 à 9, **caractérisé en ce que** le système d'entraînement auxiliaire (40) comprend deux moteurs d'entraînement (41) indépendants l'un de l'autre pour entraîner des roues gauche et droite (4) du véhicule indépendamment l'une de l'autre, et lesdits moyens de commande (50) comprennent deux moyens de commande du moteur (52) destinés à commander la sortie de puissance auxiliaire de chacun desdits moteurs d'entraînement (41) conformément à la puissance humaine appliquée à la roue respective (4).

11. Véhicule selon au moins l'une des revendications 1 à 10, **caractérisé en ce que** lesdits moyens de commande (50) sont raccordés à un premier moyen de détection (30) destiné à détecter une puissance humaine directement appliquée auxdites roues gauche et droite (4) et un deuxième moyen de détection (34) destiné à détecter une puissance humaine appliquée aux cotés gauche et droit (7, 7) d'un ensemble formant cadre (2) dudit véhicule.

12. Véhicule selon au moins l'une des revendications 1 à 11, **caractérisé par** un système d'embrayage (46) pouvant être actionné par un conducteur dudit véhicule et étant capable de raccorder et de détacher mécaniquement lesdites roues d'entraînement (4) audit/dudit système d'entraînement auxiliaire (40).

13. Procédé d'entraînement d'un véhicule à propulsion assistée, en particulier d'un fauteuil roulant, comprenant un système d'entraînement à propulsion humaine (16 ; 7) et un système d'entraînement auxiliaire (40) dans lesquels ledit procédé comprend les étapes consistant à :

    appliquer une puissance humaine audit véhicule à intervalles pour entraîner au départ ledit véhicule, et appliquer une puissance auxiliaire, en particulier, une puissance électrique audit véhicule pour entraîner ledit véhicule en soutien de ladite puissance humaine,

    **caractérisé en ce que** le procédé comprend en outre l'étape consistant à continuer à appliquer ladite puissance auxiliaire audit véhicule pendant une période de temps indifféremment d'une vitesse du véhicule, après que la fourniture de la puissance humaine ait cessé.

14. Procédé selon la revendication 13, **caractérisé en ce que** la puissance auxiliaire est augmentée conformément à une augmentation de la fourniture de la puissance humaine et, lorsqu'une valeur maximale est atteinte, la puissance auxiliaire est successivement réduite conformément à un taux de réduction prescrit.

15. Procédé selon la revendication 14, **caractérisé en ce que** la puissance auxiliaire est de nouveau augmentée conformément à ladite puissance humaine lorsque ladite puissance humaine excède une valeur correspondant à la puissance auxiliaire actuelle conformément à un processus de réduction actuel s'appliquant au véhicule pendant ladite période de temps.

16. Procédé selon au moins l'une des revendications 13 à 15, **caractérisé en ce que** la puissance auxiliaire est maintenue approximativement à sa valeur maximale ($F_{AMAX}$) pendant une période fixe à partir de l'instant ($t_1$) où ladite puissance auxiliaire atteint sa valeur maximale et après ladite période ladite puissance auxiliaire est progressivement réduite à partir de sa valeur maximale avec un taux de réduction sensiblement constant.

FIG. 1

FIG. 2

FIG. 3

FIG. 4

FIG. 5

FIG. 6

FIG. 7

FIG. 8

FIG. 9

FIG. 10

FIG. 11

Potentiometer
output
$V_{in}$

b

c

d

$F_{M0}$    $F_{M1}$    $F_{M2}$    human power $F_M$

d'

b'

c'

non-sensible zone

FIG. 12

target torque $\tau$ [Nm]

assist ratio larger

assist ratio smaller

$V_{i1}$

$V_{i2}$    input signal $V_{in}$[V]

FIG. 13

FIG. 14

FIG. 15

FIG. 16

FIG. 17

assist power calculation

STEP 1

input value abnormal?
$V_{low} < V_1 < V_{high}$
$V_{low} < V_2 < V_{high}$ —— NO

STEP 2

error processing

YES

STEP 3

advancing?
$V_1 - V_{null} > 0$ —— NO(REVERSING)

YES(ADVANCING)

STEP 4

gaining absolute value
$V_{pos} = V_1 - V_{null}$

STEP 9

gaining absolute value
$V_{neg} = V_{null} - V_1$

STEP 5

maximum value decision
$V_{pmax} < V_{pos}$ —— NO

STEP 6

YES

maximum value renewal
$V_{pmax} = V_{pos}$

STEP 10

maximum value decision
$V_{nmax} < V_{neg}$ —— NO

STEP 11

YES

maximum value renewal
$V_{nmax} = V_{neg}$

STEP 7

gradual decrease required?
$V_{pmax} > 0$ —— NO

STEP 8

YES

gradual decrease with time
$V_{pmax} = V_{pmax} - dV$

STEP 12

gradual decrease required?
$V_{nmax} > 0$ —— NO

STEP 13

YES

gradual decrease with time
$V_{nmax} = V_{nmax} - dV$

assist power calculation
$V_{out} = k1 * V_{pmax} - k2 * V_{nmax} + k3 * V_2$ —— STEP 14

RETURN —— STEP 15

FIG. 18

28

FIG. 19

29

assist power calculation

STEP 1

input value abnormal?
$V_{low} < V_1 < V_{high}$
$V_{low} < V_2 < V_{high}$

NO → error processing   STEP 2

YES

STEP 3

advancing?
$V_1 - V_{null} > 0$

NO(REVERSING)

YES (ADVANCING)

STEP 4
gaining absolute value
$V_{pos} = V_1 - V_{null}$

STEP 9
gaining absolute value
$V_{neg} = V_{null} - V_1$

STEP 5
maximum value decision
$V_{pmax} < V_{pos}$   NO

STEP 10
maximum value decision
$V_{nmax} < V_{neg}$   NO

STEP 6   YES
maximum value renewal
$V_{pmax} = V_{pos}$

STEP 11   YES
maximum value renewal
$V_{nmax} = V_{neg}$

STEP 7
gradual decrease required?
$V_{pmax} > 0$   NO

STEP 12
gradual decrease required?
$V_{nmax} > 0$   NO

STEP 8   YES
calculate residual amount
$V_{pmax} = V_{pmax} - dV(t)$

STEP 13   YES
calculate residual amount
$V_{nmax} = V_{nmax} - dV(t)$

assist power calculation
$V_{out} = k1 * V_{pmax} - k2 * V_{nmax} + k3 * V_2$   STEP 14

RETURN   STEP 15

FIG. 20

FIG. 21

FIG. 22

FIG. 23

FIG. 24

FIG. 25